# EUROPEAN PATENT SPECIFICATION

(11) **EP 1 099 492 B1**
(45) Date of publication and mention of the grant of the patent: **30.03.2005**
(21) Application number: 00660196.7
(22) Date of filing: 09.11.2000
(51) Int. Cl.: B21C 37/29

(54) **Automated collar-forming drill mechanism**
Automatisierten Bohrmechanismus zum Formen von Aushalsungen
Mécanisme de forage automatisé pour la formation de collerettes

(30) Priority: 12.11.1999 FI 992437
(43) Date of publication of application: 16.05.2001
(73) Proprietor: T-DRILL OY, 66401 Laihia (FI)
(72) Inventor: Letho, Pertti, 66400 Laihia (FI); Haavisto, Kari, 65100 Vaasa (FI); Ropponen, Vesa, 31900 Punkalaidun (FI); Saari, Timo, 66400 Laihia (FI)
(74) Representative: LEITZINGER OY

(56) References cited:
- NL-A- 302 693
- US-A- 2 631 480
- US-A- 3 884 060
- US-A- 4 175 413

## Description

The invention relates to an automated collar-forming drill mechanism, comprising a rotatable drive shaft, a tool head mounted on the end of the drive shaft, an actuator for rotating the drive shaft, transfer means for carrying the drive shaft and the tool head back and forth in axial direction, said tool head comprising a drill for drilling a hole in the wall of a workpiece, such as a pipe, as the tool head is carried in one axial direction during a drilling operation, and collar-forming pegs adapted to extend below the hole rims and to extract the hole-encircling wall material for a collar as the tool head is carried in the opposite axial direction during a collar-forming operation.

This type of collar-forming drill devices are prior known e.g. from Patent publications US-3,884,060 and 3,592,038. In these prior art mechanisms, the working actions are based on designing the drive shaft as a screw spindle and on maneuvering the struts seated against a pipe to be machined by means of a bifurcated nut element, which is engageable with a rotating spindle provided with a left-hand helix. This arrangement involves a number of drawbacks. Operating speeds and directions are dependent on the rotational speed and direction of the spindle. Thus, the motions or actions cannot be optimized. In addition, the nut and the screw spindle wear in use, which reduces the service life of the mechanism or results repeatedly in a labour-intensive and expensive maintenance action.

Patent publication U.S. 4 175 413 shows a method of and an apparatus for forming by frictional heat and pressure a bossed hole in a metal plate or a tube wall with the aid of a rapidly rotating piercing tool. The axial feed is controlled by a hydraulic cylinder and the valves of the hydraulic circuit are driven by pneumatic cylinders.

It is an object of the invention to provide an automated collar-forming drill mechanism improved in such a way that the operating speeds, operating ranges or distances, speed variation points, and reversing points of a tool head may all be selected as desired and provided with versatile regulating options, in addition to which the wear and maintenance demand are minimal for equipment responsible for power transmission.

This object is achieve on the basis of the characterizing features set forth in the appended claim 1. The dependent claims disclose preferred embodiments of the invention.

One exemplary embodiment of the invention will now be described in more detail with reference to the accompanying drawings, in which
- fig. 1: shows a mechanism of the invention in a partial elevation;
- fig. 2: shows the most essential elements for the pneumatic side and hydraulic side of a piston-cylinder assembly effecting the axial motions for a mechanism of the invention; and
- figs. 3A-3C: depict schematically the actions of a tool head 2 during a hole-making operation; and
- figs. 4A-4C: depict schematically the axial movements of a tool head 2 during a collar-forming operation.

The bottom end of a drive shaft 1 to be rotated by an actuator 3 is fitted with a tool head 2, comprising conventionally a drill bit 34 and collar-forming pegs 33, which engage in slots present in the conical surface of an adjusting means 32 in such a way that, by rotating the adjusting means 32 relative to the rod of the drill 34, the collar-forming pegs 33 can be extended from the drill bit or retracted into the drill bit, depending on the rotational direction of the adjusting means 32. The arrangement can be conventionally such that a spiral spring keeps the adjusting cone 32 in a position with the pegs 33 retracted but, by decelerating the rotation of the adjusting cone 32 by means of a brake 31 operated by a pneumatic cylinder 30, the pegs 33 can be extended for the duration of braking. The braking force only needs to overcome the springback factor of a spiral spring (not shown).

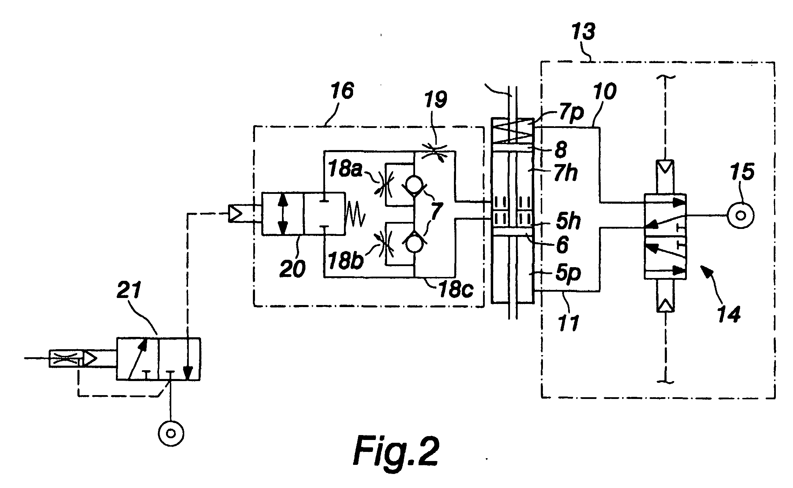

The tool head 2 and the drive shaft 1 are maneuvered back and forth in axial direction, in practice up and down, by means of a piston-cylinder assembly 5-9, comprising two cylinders 5, 7, the lower cylinder 5 of which constitutes at the same time a housing 4, which is braced to be immobile. Each cylinder carries a piston 6, 8, on one side of which is provided a hydraulic fluid compartment 5h and 7h, respectively, and on the other side there is a cylinder compartment 5p, 7p for a pneumatic gas. The pistons 6, 8 and the cylinder compartments 5p and 7p, present on the opposite sides thereof, constitute a double-acting pneumatic piston-cylinder assembly, wherein the traveling direction of the pistons 6, 8, and that of a piston rod 9 secured thereto, is adapted to be reversed by means of a reversing valve 14 (fig. 2). Depending on the position of the valve 14 visible in fig. 2, the pistons 6, 8 and the piston rod 9 travel up or down as a result of pressure coming from a source of compressed air 15. Control over operating speeds and operating ranges is effected as follows.

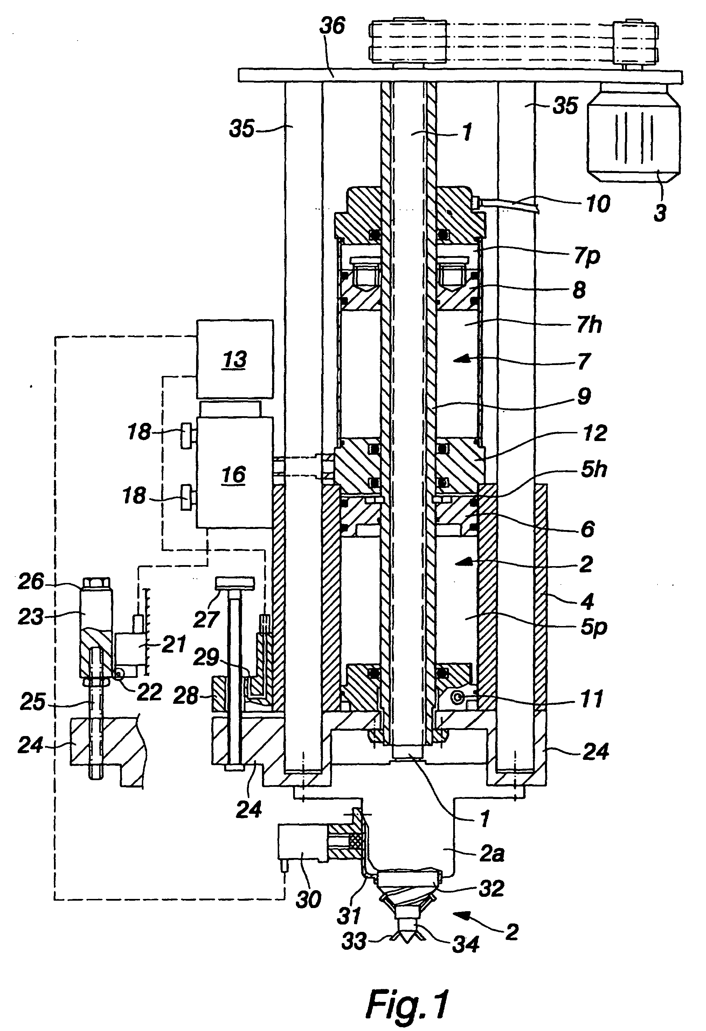

For a hydraulic limitation to the speeds of actual working actions, the hydraulic fluid compartments 5h, 7h are in a flow communication with each other by way of a flow channel 18c (fig. 2) provided with oppositely facing directional control valves 17 and, alongside the same, individually adjustable throttle valves 18a, 18b. Manual adjusting knobs 16 for the throttle valves are visible in fig. 1 along with a hydraulic valve block 16. Thus, the working actions or strokes effected up and down can be given speeds different from each other and controllable in a stepless fashion.

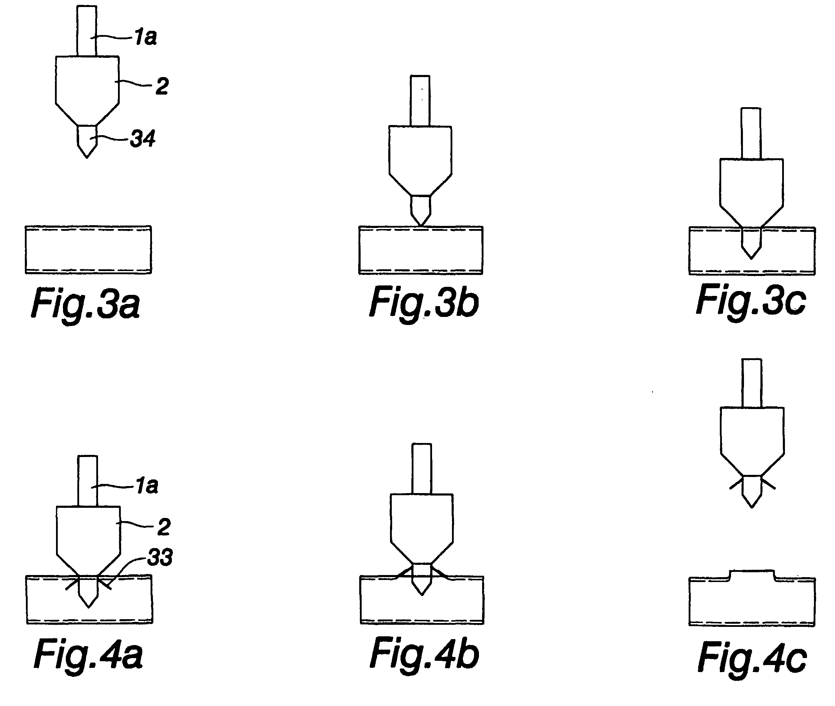

In addition to slow working actions, it is necessary to have high-speed actions for delivering the tool head 2 from a top position (Fig. 3A) to an initial drilling position (Fig. 3B) and, after completing a collar, back to the top position (Fig. 4C). In order to accomplish these high-speed or rapid actions, the throttle valves 8a, 8b are adapted to be by-passed by a hydraulic on/off valve 20, in the on-position of which the tool head is drivable with said rapid actions. The hydraulic valve 20 receives its control from a pneumatic impulse valve 21, the impulse output threshold of which determines the initial position of a drilling operation and the terminal position of a collar-forming operation. Therefore, a flange 24 movable along with the tool head 2 is fitted with an impulse output threshold barrier 23, 26, whose position is vertically adjustable by means of a screw spindle 25. As the pneumatic impulse valve 21 has its roller 22 running along the outer threshold barrier surface 23, the hydraulic valve 20 will be in its on-position, allowing an unimpeded circulation of hydraulic fluid between the cylinder compartments 5h, 7h, whereby the pneumatic cylinders 5p, 7p are capable of driving the piston rod 9 up or down with a high-speed action. The condition of fig. 1 corresponds to the initial condition shown in fig. 3A, wherein the roller 22 is in its extreme bottom position with respect to the impulse output threshold barrier 23, 25, 26 (which, in turn, is set in its top position). As the downward rapid motion reaches the initial drilling position (Fig. 3B), the roller 22 will be released from the surface 23 at the conical end 26, the valve 21 releasing the valve 20 to its off-position (the condition of fig. 2). This terminates a rapid action and the action or motion continues at a drilling speed set by the throttle valve 18a. The speed of a rapid action can be controlled by a throttle valve 19.

As the drilling is completed (Fig. 3C), a bottom barrier 27 collides with a flange 28 of the housing 4 and in so doing closes a port 29 associated with the pneumatic circuit. This closure delivers a pneumatic compressed-air pulse to a pneumatic block 13, as a result of which the reversing valve 14 reverses its direction for the commencement of a collar-forming operation (figs. 4A and 4B). The bottom barrier 27 sets also mechanically the bottom limit for a drilling operation exactly at a certain point, which eliminates inaccuracy of the pneumatically effected operations. The bottom barrier 27 has also its distance from the flange 28 adjustable by means of a screw tap, which attaches the barrier 27 to the flange 24.

A pressure impulse produced by closing the port 29 delivers the pressure also to a brake cylinder 30, which concurrently with a reversal extends the collar-forming pegs 33 while the adjusting cone 32 is rotated around a drill rod 1a by a friction brake 31.

As the collar-forming operation terminates, the valve 21 has its roller 22 collide again with the conical surface 26 of the threshold barrier 23 and shift the valve 21 to a position, wherein the compressed air is able to pass through the valve 21 for pushing the valve 20 to the on-position, allowing an unimpeded circulation of hydraulic fluid between the cylinder compartments 5h, 7h, whereby the tool head 2 rises up with a high-speed action (Fig. 4C).

An impulse threshold valve (not shown), setting the top position, drives the reversing valve 14 to an intermediate position and the pistons 6, 8 come to a halt. The next run is commenced either with manual control or automatically by delivering a control impulse to the reversing valve 14, which is driven to the top position (fig. 2 shows the same in bottom position). The impulse threshold valve, setting the top position, may also have a threshold response or barrier which is adjustable in order to eliminate an unnecessary travel from the high-speed action.

Below the housing cylinder 4, 5 is a flange 24, which is movable along with the piston rod 9 and fitted with a journal box 2a for the tool head 2, with the bottom barrier 27, and with the impulse output threshold barrier 23, 25, 26 for the valve 21.

The movable flange 24 is fitted with guide bars 35 extending through the housing 4, the top ends of which are secured to a bearing flange 36 the same as the piston rod 9. The actuator 3 is also secured to the bearing flange 36.

## Claims

1. An automated collar-forming drill mechanism, comprising a rotatable drive shaft (1), a tool head (2) mounted on the end of the drive shaft, an actuator (3) for rotating the drive shaft, transfer means (5-9) for carrying the drive shaft (1 ) and the tool head (2) back and forth in axial direction, said tool head (2) comprising a drill (34) for drilling a hole in the wall of a workpiece, such as a pipe, as the tool head (2) is carried in one axial direction during a drilling operation, and collar-forming pegs (33) adapted to extend below the hole rims and to extract the hole-encircling wall material for a collar as the tool head (2) is carried in the opposite axial direction during a collar-forming operation, **characterized in that** the power unit delivering said axial motions comprises a double-acting pneumatic piston-cylinder assembly (5-9), the operating direction of its piston or pistons (6, 8) being adapted to be reversed by means of a reversing valve (14), that the speed of said axial motions is hydraulically limited, and that the piston-cylinder assembly (5-9) comprises two cylinders (5, 7), each cylinder including a piston (6, 8), having one side (5p, 7p) thereof provided with a pneumatic gas and the other side (5h, 7h) with a hydraulic fluid compartments (5h, 7h) with a hydraulic fluid therein, said hydraulic fluid compartments (5h, 7h) being in flow communication with each other.

2. A mechanism as set forth in claim 1, **characterized in that** the reversing valve (14) receives its control from a mechanical bottom barrier (27) for drilling operation.

3. A mechanism as set forth in claim 2, **characterized in that** the bottom barrier (27) sets mechanically a bottom limit for drilling operation and concurrently closes a port (29) associated with a pneumatic circuit, the closure of which produces a pneumatic pressure impulse, which results in a reversal of the reversing valve (14) for the commencement of a collar-forming operation.

4. A mechanism as set forth in any of claims 1-3, **characterized in that**, for a hydraulic limitation to the speed of axial motions the mechanism includes hydraulic limit cylinders, provided with the hydraulic fluid compartments (5h, 7h) which are in flow communication with each other by way of a flow channel (18c), which is provided with oppositely directed directional control valves (17) and, alongside with the same, individually adjustable throttle valves (18a, 18b).

5. A mechanism as set forth in claim 4, **characterized in that** the throttle valves (18a, 18b) are by-passable by a hydraulic on-off valve (20), in the on-position of which the tool head (2) is drivable with a high-speed action from the top position to a drilling operation commencing position and from a collar-forming operation terminal position to the top position.

6. A mechanism as set forth in claim 5, **characterized in that** the hydraulic valve (20) receives its control from a pneumatic impulse valve (21), having an impulse output threshold (26) which is adjustable and determines a commencing position for drilling operation and a terminal position for collar-forming operation.

7. A mechanism as set forth in any of claims 1-6, **characterized in that** the piston-cylinder assembly (5-9) comprises a piston rod (9) in the form of a tube, the drive shaft (1) extending therethrough, said drive shaft (1) being rotatable relative to the piston rod (9) but movable along with the piston rod (9) in axial direction.

8. A mechanism as set forth in any of claims 1-7, **characterized in that** the piston-cylinder assembly (5-9) has one (5) of its cylinders included in a housing (4) of the mechanism, which is propped to be immobile and below which is a flange (24) movable along with the piston rod (9) and fitted with a journal box (2a) for the tool head (2) and with an adjustable bottom barrier (27), whose barrier element comprises a flange (28) protruding from the housing (4).

9. A mechanism as set forth in claim 8, **characterized in that** the impulse valve (21) mounted on the housing (4) has its adjustable impulse output threshold barrier (23, 25, 26) secured to the movable flange (24).

10. A mechanism as set forth in claim 8 or 9, **characterized in that** the movable flange (24) is fitted with guide bars (35) extending through the housing (4) and having the top ends thereof secured to a bearing flange (36) the same as the piston rod (9), the actuator (3) being secured to the bearing flange (36).

## Patentansprüche

1. Automatisierter Bohrmechanismus zum Formen von Aushalsungen, umfassend eine drehbare Antriebswelle (1), einen auf das Ende der Antriebswelle montierten Werkzeugkopf (2), einen Aktuator (3) zum Drehen der Antriebswelle, Übertragungsmittel (5 - 9) zum Befördern der Antriebswelle (1) und des Werkzeugkopfs (2) vor und zurück in axialer Richtung, wobei der Werkzeugkopf (2) einen Bohrer (34) zum Bohren eines Lochs in die Wand eines Werkstücks, wie z.B. eines Rohrs, umfasst, während der Werkzeugkopf (2) bei Bohrbetrieb in eine axiale Richtung befördert wird, und Aushalsungen formende Zapfen (33), die geeignet sind, sich unterhalb der Lochränder zu erstrecken und das Loch einkreisende Wandmaterial für eine Aushalsung herausauszuziehen, während der Werkzeugkopf (2) in die entgegengesetzte axiale Richtung bei Betrieb zum Formen von Aushalsungen befördert wird,
**dadurch gekennzeichnet,**
**dass** der die Achsenbewegungen abgebende Antrieb eine doppeltwirkende pneumatische Kolben-Zylinder-Baugruppe (5 - 9) umfasst, wobei die Betriebsrichtung von deren Kolben oder Kolben (6, 8) geeignet ist mittels eines Umschaltventils (14) umgekehrt zu werden, dass die Geschwindigkeit der Achsenbewegungen hydraulisch begrenzt wird und dass die Kolben-Zylinder-Baugruppe (5 - 9) zwei Zylinder (5, 7) umfasst, wobei jeder Zylinder einen Kolben (6, 8) enthält, dessen eine Seite (5p, 7p) mit einem pneumatischen Gas und dessen andere Seite (5h, 7h) mit eine Hydraulikflüssigkeit enthaltenden Hydraulikflüssigkeitsräumen (5h, 7h) versehen ist, wobei die Hydraulikflüssigkeitsräume (5h, 7h) miteinander in Strömungsverbindung stehen.

2. Mechanismus nach Anspruch 1,
**dadurch gekennzeichnet,**
**dass** das Umschaltventil (14) seine Steuerung zum Bohrbetrieb von einer mechanischen Unterschranke (27) empfängt.

3. Mechanismus nach Anspruch 2,
**dadurch gekennzeichnet,**
**dass** die Unterschranke (27) mechanisch ein Unterlimit für den Bohrbetrieb setzt und gleichzeitig eine mit einer pneumatischen Schaltung verbundene Mündung (29) schließt, wobei deren Schließen einen pneumatischen Druckimpuls erzeugt, welcher in einer Umkehrung des Umschaltventils (14) zur Aufnahme eines Betriebs zur Formung von Aushalsungen resultiert.

4. Mechanismus nach einem der Ansprüche 1- 3,
**dadurch gekennzeichnet,**
**dass** für eine hydraulische Begrenzung der Geschwindigkeit von Achsenbewegungen der Mechanismus hydraulische Grenzzylinder beinhaltet, ausgestattet mit den Hydraulikflüssigkeitsräumen (5h, 7h), die miteinander in Strömungsverbindung stehen durch einen Strömungskanal (18c), der mit entgegengesetzt gerichteten Richtungssteuerventilen (17) und, längsseits derselben, individuell justierbaren Drosselventilen (18a, 18b) ausgestattet ist.

5. Mechanismus nach Anspruch 4,
**dadurch gekennzeichnet,**
**dass** die Drosselventile (18a, 18b) umgehbar sind mittels eines Hydraulikschaltventils (20), in dessen Offenstellung der Werkzeugkopf (2) mit Schnellfunktion von der Ausgangsposition in eine Bohrbetriebsanfangsposition und von einer Aushalsungen formenden Betriebsendposition in die Ausgangsposition betätigbar ist.

6. Mechanismus nach Anspruch 5,
**dadurch gekennzeichnet,**
**dass** das Hydraulikventil (20) seine Steuerung von einem Druckluftimpulsventil (21) mit einem Impulsausgangsgrenzwert (26) empfängt, der einstellbar ist und eine Anfangsposition für den Bohrbetrieb und eine Endposition für den Aushalsungen formenden Betrieb festlegt.

7. Mechanismus nach einem der Ansprüche 1 - 6,
**dadurch gekennzeichnet,**
**dass** die Kolben-Zylinder-Baugruppe (5 - 9) eine Kolbenstange (9) in Form einer Röhre umfasst, durch die sich die Antriebswelle (1) erstreckt, wobei die Antriebswelle (1) zwar relativ zu der Kolbenstange (9) rotierbar, jedoch zusammen mit der Kolbenstange (9) in axialer Richtung bewegbar ist.

8. Mechanismus nach einem der Ansprüche 1 - 7,
**dadurch gekennzeichnet,**
**dass** einer (5) der Zylinder der Kolben-Zylinder-Baugruppe (5 - 9) in einem Gehäuse (4) des Mechanismus angeordnet ist, das gestützt ist, um unbeweglich zu sein und unterhalb welchem ein Flansch (24) zusammen mit der Kolbenstange (9) bewegbar und ausgestattet ist mit einem Achslager (2a) für den Werkzeugkopf (2) und mit einer justierbaren Unterschranke (27), deren Schrankenelement einen aus dem Gehäuse (4) herausragenden Flansch (28) umfasst.

9. Mechanismus nach Anspruch 8,
**dadurch gekennzeichnet,**
**dass** die justierbare Impulsausgangsgrenzwertschranke (23, 25, 26) des an dem Gehäuse (4) montierten Impulsventils (21) an dem bewegbaren Flansch (24) gesichert ist.

10. Mechanismus nach Anspruch 8 oder 9,
**dadurch gekennzeichnet,**
**dass** der bewegbare Flansch (24) ausgestattet ist mit Führungsstäben (35), die sich durch das Gehäuse (4) erstrecken und deren Kopfenden an einem Lagerflansch (36) gesichert sind, ebenso wie die Kolbenstange (9), wobei der Aktuator (3) an dem Lagerflansch (36) befestigt ist.

## Revendications

1. Dispositif automatisé de foret de formage de collets ou collerettes, comprenant un arbre moteur rotatif (1), une tête porte-outil (2) montée sur l'extrémité de l'arbre moteur, un actionneur (3) destiné à entraîner en rotation l'arbre moteur, des moyens de transfert (5 à 9) destinés à transporter l'arbre moteur (1) et la tête porte-outil (2) en va-et-vient dans une direction axiale, ladite tête porte-outil (2) comprenant un foret (34) destiné à forer un orifice dans la paroi d'une pièce de fabrication, tel qu'un tuyau, lorsque la tête porte-outil (2) est transportée dans une direction axiale au cours d'une opération de forage, et des taquets de formage de collet ou collerette (33) adaptés pour s'étendre en dessous des rebords de l'orifice et pour extraire le matériau de paroi entourant l'orifice pour un collet ou collerette, lorsque la tête porte-outil (2) est transportée dans la direction axiale opposée, au cours d'une opération de formage de collet ou collerette, **caractérisé en ce que** le groupe moteur entraînant lesdits mouvements axiaux comprend un ensemble à piston et cylindre (5 à 9) à double effet, le sens de marche de son piston ou de ses pistons (6, 8) étant adapté pour être inversé au moyen d'une vanne d'inversion (14), **en ce que** la vitesse desdits mouvements axiaux est limitée par des moyens hydrauliques, et **en ce que** l'ensemble à piston et cylindre (5 à 9) comprend deux cylindres (5, 7), chaque cylindre comprenant un piston (6, 8), ayant un côté (5p, 7p) de celui-ci muni de gaz pneumatique et l'autre côté (5h, 7h) muni de compartiments à fluide hydraulique (5h, 7h) avec un fluide hydraulique dans ceux-ci, lesdits compartiments à fluide hydraulique (5h, 7h) étant en communication fluidique l'un avec l'autre.

2. Dispositif selon la revendication 1, **caractérisé en ce que** la vanne d'inversion (14) est commandée par une barrière mécanique de limite inférieure (27) pour une opération de forage.

3. Dispositif selon la revendication 2, **caractérisé en ce que** la barrière de limite inférieure (27) règle automatiquement une limite inférieure pour une opération de forage et ferme simultanément un port (29) associé à un circuit pneumatique, la fermeture duquel produit une impulsion de pression pneumatique, qui entraîne une inversion de la vanne d'inversion (14) pour le commencement d'une opération de formage de collet ou collerette.

4. Dispositif selon l'une quelconque des revendications 1 à 3, **caractérisé en ce que**, pour une limitation hydraulique de la vitesse des mouvements axiaux, le dispositif comprend des cylindres à limite hydraulique, munis des compartiments à fluide hydraulique (5h, 7h) qui sont en communication fluidique l'un avec l'autre au moyen d'un canal d'écoulement (18c) qui est muni de vannes de commande directionnelle à direction opposée (17) et, le long de celles-ci, de vannes de réglage ajustables de manière individuelle (18a, 18b).

5. Dispositif selon la revendication 4, **caractérisé en ce que** les vannes de réglage (18a, 18b) peuvent être dérivées par une vanne de commutation hydraulique (20), dans la position de marche de laquelle, la tête porte-outil (2) peut être entraînée avec un effet de grande vitesse à partir de la position supérieure vers une position de commencement de forage et à partir d'une position terminale de formage de collet ou collerette vers la position supérieure.

6. Dispositif selon la revendication 5, **caractérisé en ce que** la vanne hydraulique (20) est commandée par une vanne à impulsion pneumatique (21) ayant un seuil de sortie d'impulsion (26) qui est réglable et qui détermine une position de commencement pour une opération de forage et une position terminale pour une opération de formage de collet ou collerette.

7. Dispositif selon l'une quelconque des revendications 1 à 6, **caractérisé en ce que** l'ensemble à piston et cylindre (5 à 9) comprend une tige de piston (9) sous forme d'un tube, l'arbre moteur (1) s'étendant à travers celle-ci, ledit arbre moteur (1) pouvant pivoter par rapport à la tige de piston (9) mais étant mobile avec la tige de piston (9) dans une direction axiale.

8. Dispositif selon l'une quelconque des revendications 1 à 7, **caractérisé en ce que** l'ensemble à piston et cylindre (5 à 9) a l'un (5) de ses cylindres compris dans un boîtier (4) du dispositif, qui est étayé pour être immobile, et sous lequel se trouve une bride (24) mobile avec la tige de piston (9) et adaptée avec une boîte à biellettes (2a) pour la tête porte-outil (2) et avec une barrière de limite inférieure réglable (27), dont l'élément faisant barrière comprend une bride (28) faisant saillie à partir du boîtier (4).

9. Dispositif selon la revendication 8, **caractérisé en ce que** la vanne à impulsion (21) montée sur le boîtier (4) a sa barrière de seuil de sortie d'impulsion réglable (23, 25, 26) fixée à la bride mobile (24).

10. Dispositif selon la revendication 8 ou 9, **caractérisé en ce que** la bride mobile (24) est adaptée avec des barres de guidage (35) s'étendant à travers le boîtier (4) et ayant les extrémités supérieures de celles-ci fixées à une bride de support (36) tout comme la tige de piston (9), l'actionneur (3) étant fixé à la bride de support (36).
